# EUROPÄISCHE PATENTSCHRIFT

(11) **EP 3 429 040 B1**
(45) Veröffentlichungstag und Bekanntmachung des Hinweises auf die Patenterteilung: **11.11.2020**
(21) Anmeldenummer: 18181407.0
(22) Anmeldetag: 03.07.2018
(51) Int. Cl.: H02G 3/04, E04F 19/04

(54) **ABDECKSCHIENE**
COVERING PROFILE
RAIL DE RECOUVREMENT

(30) Priorität: 13.07.2017 DE 102017115772
(43) Veröffentlichungstag der Anmeldung: 16.01.2019
(73) Patentinhaber: Protektorwerk Florenz Maisch GmbH & Co. KG, 76571 Gaggenau (DE)
(72) Erfinder: KAUFMANN, Gerhard, 76476 Bischweier (DE); ALBRECHT, Markus, 71397 Leutenbach (DE)
(74) Vertreter: Manitz Finsterwald Patent- und Rechtsanwaltspartnerschaft mbB

(56) Entgegenhaltungen:
- WO-A2-2005/052277
- DE-A1-102010 011 506
- DE-U- 1 901 541
- DE-U1-202007 002 815

## Beschreibung

Die vorliegende Erfindung betrifft eine Abdeckschiene, die ein sich in einer Längsrichtung erstreckendes Grundprofil und ein sich in Längsrichtung erstreckendes Abdeckprofil umfasst. Eine Fußbodenleiste mit den Merkmalen des Oberbegriffs des Anspruchs 1 ist aus WO2005/052277A2 bekannt. Weitere derartige Fußbodenleisten werden in DE1901541U und DE202007002815U1 beschrieben.

Abdeckschienen werden bei Kanten- und Übergangsbereichen eingesetzt, um verschiedene Materialien, wie zum Beispiel Noppenbahnen, Folien, Bleche, Holzschalungen, HPL-Platten oder ähnliche Materialien zu überdecken. Hierbei ist es bei bekannten Abdeckschienen erforderlich, dass diese bereits beim oder vor dem Anbringen der zu überdeckenden Materialien installiert werden. Bei Renovierungsarbeiten an Gebäuden, sind bekannte Abdeckschienen nur mit hohem Aufwand einsetzbar, da bei deren nachträglicher Anbringung oftmals ein vollständiges oder teilweises Entfernen der zu überdeckenden Materialien vorgenommen werden muss. Zudem sind bei den bekannten Abdeckschienen die Einsatzmöglichkeiten begrenzt, da sie eine festgelegte lichte Weite zur Aufnahme der abzudeckenden Materialien aufweisen und daher zum Abdecken einer Folie in der Regel eine andere Abdeckschiene verwendet werden muss, als zum Abdecken einer Noppenbahn.

Es ist eine Aufgabe der vorliegenden Erfindung, eine vielseitig einsetzbare Abdeckschiene bereitzustellen, welche nachträglich angebracht werden kann, um beispielsweise bei Renovierungsarbeiten an Gebäuden Abdeckungen von Materialien zu ermöglichen, ohne diese Materialien zuvor entfernen zu müssen.

Die Lösung der Aufgabe erfolgt durch eine Abdeckschiene mit den Merkmalen des Anspruchs 1.

Eine erfindungsgemäße Abdeckschiene umfasst ein sich in einer Längsrichtung erstreckendes Grundprofil mit einem langgestreckten Basisabschnitt sowie einem ersten und einem zweiten Befestigungsschenkel. Die Befestigungsschenkel stehen von dem Basisabschnitt ab und bilden mit zumindest einem Teil des Basisabschnitts einen U-förmigen Querschnitt. Zudem umfasst die erfindungsgemäße Abdeckschiene ein sich in Längsrichtung erstreckendes Abdeckprofil mit einem langgestreckten Abdeckabschnitt und einem ersten und einem zweiten Rastschenkel, wobei die Rastschenkel so von dem Abdeckabschnitt abstehen, dass der Abdeckabschnitt einen zwischen den Rastschenkeln angeordneten Teil und einen seitlich über einen der Rastschenkel überstehenden Teil aufweist. Das Grundprofil und das Abdeckprofil sind so ausgebildet, dass sie zusammensetzbar sind, um die Abdeckschiene zu bilden. Hierfür sind an dem ersten und zweiten Befestigungsschenkel jeweils Befestigungsmittel und an dem ersten und zweiten Rastschenkel jeweils mit den Befestigungsmitteln verrastbare Rastmittel vorgesehen. Im zusammengesetzten Zustand der Abdeckschiene sind die Befestigungsmittel mit den Rastmitteln verrastet und der überstehende Teil des Abdeckabschnitts ragt seitlich über einen der Befestigungsschenkel hinaus. Die Außenwinkel des U-förmigen Querschnitts, die jeweils zwischen einem der Befestigungsschenkel und dem Basisabschnitt vorliegen, sind größer als 270°.

Aufgrund des mehrteiligen Aufbaus der Abdeckschiene mit einem Grundprofil und einem Abdeckprofil ist es möglich, zunächst das Grundprofil an einer Wand zu montieren und anschließend durch ein Verrasten des Abdeckprofils am Grundprofil die Abdeckschiene zusammenzusetzen. Im zusammengesetzten Zustand überdeckt die Abdeckschiene mit dem überstehenden Teil des Abdeckabschnitts ein abzudeckendes Material, wie zum Beispiel eine Noppenbahn, eine Folie, ein Blech, eine Holzschalung, eine HPL-Platte oder ein ähnliches Material. Der U-förmige Querschnitt des Grundprofils führt zu einer Versteifung des Grundprofils, sodass das langgestreckte Grundprofil zum Montieren in Position gebracht werden kann, ohne dass sich dabei das Grundprofil verbiegt. Die zwei Befestigungsschenkel des Grundprofils ermöglichen es, die Rastschenkel des Abdeckprofils sicher am Grundprofil zur verrasten und das abzudeckende Material zuverlässig vor Witterungsbedingungen zu schützen, wie beispielsweise vor Feuchtigkeit, Schmutz und UV-Strahlung, und gleichzeitig einen optisch ansprechenden Abschluss zu bilden. Ein weiterer Vorteil des mehrteiligen Aufbaus der erfindungsgemäßen Abdeckschiene besteht darin, dass stets das gleiche Grundprofil verwendet werden kann, und je nachdem welche Materialien abgedeckt werden sollen, einfach ein anderes Abdeckprofil in das Grundprofil eingerastet werden kann. Hierdurch lässt sich die lichte Weite oder die Länge des überstehenden Teils einfach variieren, ohne dass das Grundprofil ausgetauscht werden muss, wodurch es ausreicht, nur eine Art von Grundprofil vorzuhalten und je nach Einsatz das Abdeckprofil auszuwählen.

Ein U-förmiger Querschnitt bezeichnet hierbei einen Querschnitt, bei welchem die beiden Befestigungsschenkel von der gleichen Seite des Basisabschnitts abstehen. Dies bedeutet, dass auch dann ein Grundprofil mit einem U-förmigen Querschnitt vorliegt, wenn sich die Befestigungsschenkel von dem Basisabschnitt ausgehend in gleichbleibenden, zunehmenden oder abnehmenden Abstand erstrecken. Zudem können der Basisabschnitt und die Befestigungsschenkel eben oder gekrümmt sein. Dadurch, dass erfindungsgemäß beide Außenwinkel des U-förmigen Querschnitts größer als 270° ausgebildet sind, nimmt der Abstand zwischen den Befestigungsschenkeln ausgehend vom Basisabschnitt ab. Dies stellt sicher, dass auch, wenn die Abdeckschiene mit ihrer Längsrichtung horizontal an einer Wand montiert ist, Regenwasser aufgrund des durch den Außenwinkel von größer als 270° erzeugten Gefälles abfließt.

Weiterbildungen der Erfindung sind in den abhängigen Ansprüchen, der Beschreibung sowie den beigefügten Zeichnungen angegeben.

Besonders bevorzugt sind das Abdeckprofil und das Grundprofil so ausgebildet, dass diese nach dem Zusammensetzen wieder voneinander trennbar sind, d.h. eine beim Zusammensetzen gebildete Verrastungen der Befestigungs- und Rastmittel sind durch ein Auseinanderbewegen von Abdeckprofil und Grundprofil lösbar. Hierdurch ist sichergestellt, dass das Abdeckprofil austauschbar ist und ersetzt werden kann, wenn dies beispielsweise aufgrund von Verwitterung oder einer gewünschten Änderung des Erscheinungsbildes erwünscht ist.

Der U-förmige Querschnitt des Grundprofils weist eine Öffnung auf, deren Breite durch die vom Basisabschnitt entfernten Enden der Befestigungsschenkel festgelegt ist. Die Öffnung hat bevorzugt eine Breite von mindestens 20 mm, besonders bevorzugt von mindestens 25 mm. Eine Breite der Öffnung von mindestens 20 mm stellt sicher, dass durch das Grundprofil hindurchgebohrt werden kann, ohne dass ein Bohrfutter einer dabei verwendeten Bohrmaschine an den Befestigungsschenkeln anstößt.

Nach einer vorteilhaften Ausführungsform besteht das Grundprofil aus dem Basisabschnitt, dem ersten Befestigungsschenkel und dem zweiten Befestigungsschenkel. Dies reduziert das Grundprofil auf die notwendigsten Elemente, wodurch sich dieses kostengünstig herstellen lässt und dennoch die sichere Befestigung des Abdeckprofils am Grundprofil möglich ist. Es ist jedoch zum Beispiel auch möglich, dass der Basisabschnitt über einen oder über beide Befestiungsschenkel hinausragt. Das Grundprofil ist hinsichtlich der Materialien, aus welchen es gefertigt ist, nicht limitiert, jedoch hat es sich als geeignet erwiesen, das Grundprofil aus Aluminium oder PVC herzustellen.

Bevorzugt ist das Grundprofil in Bezug auf eine senkrecht zum Basisabschnitt und parallel zur Längsrichtung verlaufende Mittelebene spiegelsymmetrisch ausgebildet. Aufgrund des spiegelsymmetrischen Aufbaus des Grundprofils muss bei dessen Montage nicht darauf geachtet werden, ob es in der richtigen Ausrichtung an der Wand anliegt.

Besonders bevorzugt sind der erste Befestigungsschenkel und der zweite Befestigungsschenkel mit voneinander verschiedenen Beschichtungen versehen, wodurch die Abdeckschiene universeller einsetzbar ist, da die beiden Befestigungsschenkel aufgrund der unterschiedlichen Beschichtungen verschiedene Eigenschaften, wie beispielsweise optische Erscheinungen, besitzen. Da im zusammengesetzten Zustand der Abdeckschiene der überstehende Teil des Abdeckabschnitts seitlich über einen der Befestigungsschenkel hinausragt, ist nur einer der Befestigungsschenkel im zusammengesetzten Zustand sichtbar und der andere von dem überstehenden Teil überdeckt und somit nicht sichtbar. Wenn beispielsweise einer der Befestigungsschenkel in einer helleren Farbe beschichtet ist als der andere Befestigungsschenkel, kann je nach Wandfarbe der Wand, an welcher die Abdeckschiene montiert wird, das Grundprofil so ausgerichtet werden, dass im zusammengesetzten Zustand der Befestigungsschenkel mit der besser zur Wandfarbe passenden Beschichtung sichtbar ist.

Um eine besonders leichte Montage zu ermöglichen, ist es bevorzugt, in dem Basisabschnitt zumindest eine horizontale und eine vertikale Langlochbohrung vorzusehen. Die horizontale Langlochbohrung verläuft hierbei in Längsrichtung des Grundprofils, und die vertikale Langlochbohrung senkrecht zur Längsrichtung. Durch die Kombination der horizontalen und vertikalen Langlochbohrung in dem Basisabschnitt, ist die Ausrichtung des Grundprofils in horizontaler und vertikaler Richtung auch dann noch möglich, wenn bereits entsprechende Bohrungen an der Wand durchgeführt wurden. Insbesondere die Durchführung der Montage durch eine einzelne Person wird durch die horizontale und die vertikale Langlochbohrung erleichtert.

Gemäß einer bevorzugten Ausführungsform sind der erste und der zweite Rastschenkel unterschiedlich lang ausgebildet. Besonders bevorzugt ist zwischen dem zweiten Rastschenkel und dem Basisabschnitt im zusammengesetzten Zustand der Abdeckschiene ein Abstand ausgebildet. Dieser Abstand ermöglicht es, dass beim Verrasten des Rastmittels des zweiten Rastschenkels mit dem entsprechenden Befestigungsmittel Fremdkörper, wie zum Beispiel Bohrstaub oder anderer Schmutz, die sich beim Montieren des Grundprofils an der Wand in dessen U-förmigen Querschnitt gesammelt haben, in Richtung des Basisabschnitts verschieben kann, ohne dass die Fremdkörper, die sich zwischen einem Ende des zweiten Rastschenkels und dem Basisabschnitt sammeln das Verrasten der Rast- und Befestigungsmittel stören.

Eine besonders bevorzugte Weiterbildung sieht vor, dass in dem Grundprofil eine Bohrstaubaufnahme vorgesehen ist, die einen im Fußbereich des zweiten Befestigungsschenkels ausgebildeten Freiraum umfasst, der im zusammengesetzten Zustand der Abdeckschiene über den Abstand mit einem Innenbereich der Abdeckschiene in Verbindung steht, sodass Bohrstaub oder anderer Schmutz, der sich beim Montieren des Grundprofils an der Wand in dem U-förmigen Querschnitt sammeln kann, in diesem Freiraum Platz findet. Hierdurch ist ein gegenseitiges Verrasten der Rast- und Befestigungsmittel auch dann möglich, wenn sich Bohrstaub oder anderer Schmutz in dem Grundprofil gesammelt hat, ohne dass eine Reinigung des Grundprofils erforderlich ist.

Bevorzugt erstreckt sich der erste Rastschenkel im zusammengesetzten Zustand der Abdeckschiene bis zum oder annähernd bis zum Basisabschnitt. Hierdurch dient der erste Rastschenkel als Abstandshalter und verhindert, dass das Grundprofil und das Abdeckprofil näher als gewünscht zusammengeschoben werden können.

Für das Abdeckprofil sind prinzipiell unterschiedliche Formen denkbar. Bevorzugt ist das Abdeckprofil so ausgebildet, dass es zumindest in einem Abschnitt einen F-förmigen Querschnitt aufweist.

Gemäß einer bevorzugten Ausführungsform sind im zusammengesetzten Zustand der Abdeckschiene die Rastschenkel zwischen den Befestigungsschenkeln angeordnet. Dies bedeutet, dass das Grundprofil mit seinen Befestigungsschenkeln die Rastschenkel des Abdeckprofils umschließt.

Bevorzugt weist zumindest eines der an den Befestigungsschenkeln vorgesehenen Befestigungsmittel eine Kontaktfläche auf, die ausgehend von dem Befestigungsschenkel, an dem das zumindest eine Befestigungsmittel vorgesehen ist, von dem Basisabschnitt des Grundprofils weggeneigt ist, wobei im zusammengesetzten Zustand der Abdeckschiene das zumindest eine Befestigungsmittel mit der Kontaktfläche an dem Rastmittel, mit dem es verrastet ist, anliegt und eine Hinterschneidung bildet. Dadurch, dass die Kontaktfläche von dem Basisabschnitt weggeneigt ist, lässt sich das Abdeckprofil leichter von dem Grundprofil trennen, nachdem diese zusammengesetzt wurden, sodass der Austausch des Abdeckprofils erleichtert ist.

Ebenfalls ist es bevorzugt, dass zumindest eines der an den Rastschenkeln vorgesehenen Rastmittel eine Kontaktfläche aufweist, die ausgehend von dem Rastschenkel, an dem das zumindest eine Rastmittel vorgesehen ist, von dem Abdeckabschnitt des Abdeckprofils weggeneigt ist, wobei im zusammengesetzten Zustand der Abdeckschiene das zumindest eine Rastmittel mit der Kontaktfläche an dem Befestigungsmittel, mit dem es verrastet ist, anliegt und eine Hinterschneidung bildet. Dadurch, dass die Kontaktfläche von dem Abdeckabschnitt weggeneigt ist, lässt sich das Abdeckprofil leichter von dem Grundprofil trennen, nachdem diese zur Abdeckschiene zusammengesetzt wurden, sodass der Austausch des Abdeckprofils erleichtert ist.

Besonders bevorzugt weisen das an dem zweiten Befestigungsschenkel vorgesehene Befestigungsmittel und das an dem zweiten Rastschenkel vorgesehene Rastmittel die oben genannten geneigten Kontaktflächen auf. Aufgrund der jeweiligen Neigung der Kontaktflächen können diese beim Trennen von Abdeckprofil und Grundprofil leichter aneinander vorbeigeschoben werden, und stellen dennoch sicher, dass aufgrund der Hinterschneidung im zusammengesetzten Zustand ein fester Halt zwischen Grund- und Abdeckprofil gegeben ist. Derartige geneigte Kontaktflächen können auch an allen Rast- und Befestigungsmitteln vorgesehen sein.

Die erfindungsgemäße Abdeckschiene lässt sich dazu verwenden, Noppenbahnen, Folien, Bleche, HPL-Platten, Holzschalungen oder andere Materialien abzudecken. Besonders bevorzugt wird die erfindungsgemäße Abdeckschiene im Außenbereich verwendet.

Die Erfindung wird nachfolgend beispielhaft unter Bezugnahme auf die Zeichnungen beschrieben.
- Fig. 1: zeigt einen Querschnitt einer Abdeckschiene einer Ausführungsform der Erfindung.
- Fig. 2: zeigt die Abdeckschiene gemäß Fig. 1 im zusammengesetzten Zustand.
- Fig. 3: zeigt eine Seitenansicht des Grundprofils der Abdeckschiene gemäß Fig. 1.
- Fig. 4: zeigt einen Querschnitt eines Grundprofils einer Abdeckschiene einer weiteren Ausführungsform der Erfindung.
- Fig. 5: zeigt einen Querschnitt eines Abdeckprofils einer Abdeckschiene einer weiteren Ausführungsform der Erfindung.
- Fig. 6: zeigt einen Querschnitt eines Abdeckprofils einer Abdeckschiene einer weiteren Ausführungsform der Erfindung.

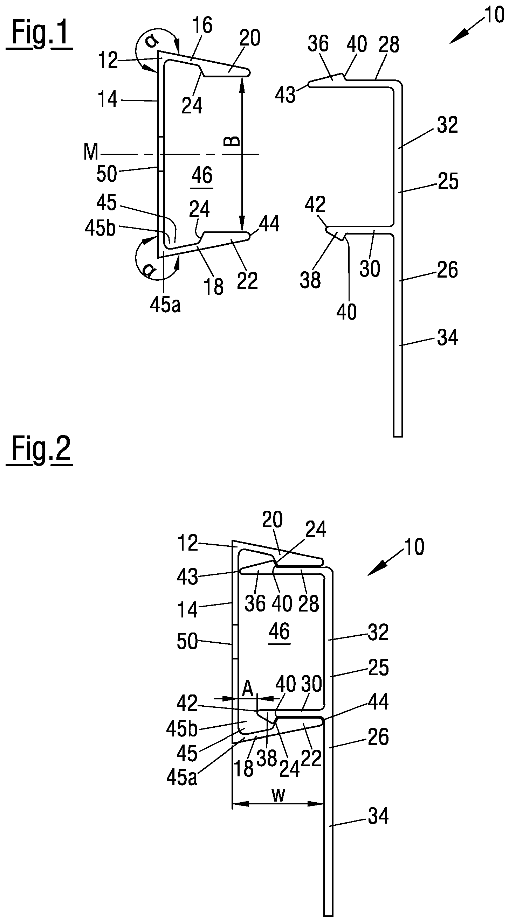

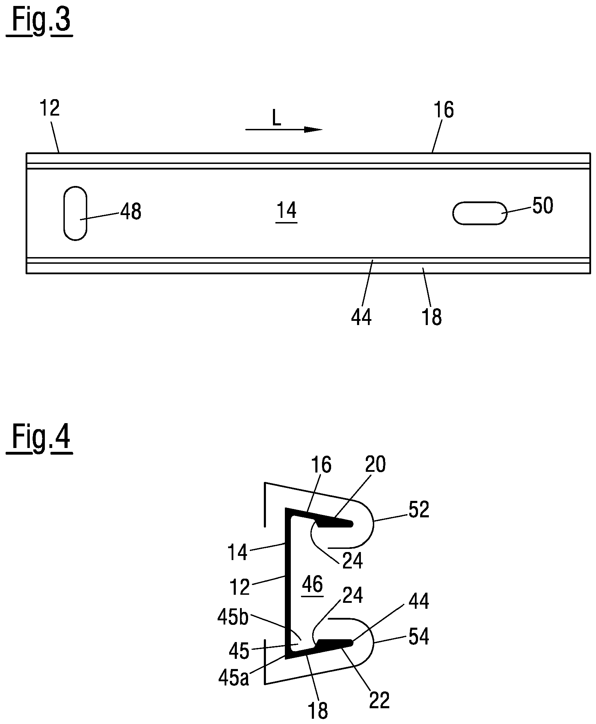

In den Figuren 1 und 2 sind Querschnitte einer Abdeckschiene 10 gemäß einer ersten Ausführungsform der Erfindung abgebildet. Fig. 3 zeigt eine Seitenansicht eines Grundprofils 12 dieser Ausführungsform. Die Abdeckschiene 10 umfasst ein sich in einer Längsrichtung L (nur in Fig. 3 dargestellt) erstreckendes Grundprofil 12, mit einem langgestreckten ebenen Basisabschnitt 14 sowie einem ersten und einem zweiten Befestigungsschenkel 16, 18, die von dem Basisabschnitt 14 abstehen und mit dem Basisabschnitt 14 einen U-förmigen Querschnitt bilden. Die Außenwinkel α (nur in Fig. 1 dargestellt) des U-förmigen Querschnitts, die von den Befestigungsschenkeln 16, 18 mit dem Basisabschnitt 14 gebildet werden, sind größer als 270°. An dem ersten Befestigungsschenkel 16 ist ein erstes Befestigungsmittel 20 vorgesehen und an dem zweiten Befestigungsschenkel 18 ist ein zweites Befestigungsmittel 22 vorgesehen. Die beiden Befestigungsmittel 20, 22 weisen jeweils eine Kontaktfläche 24 auf, die ausgehend vom entsprechenden Befestigungsschenkel 16, 18 vom Basisabschnitt 14 weggeneigt ist. Das Grundprofil 12 ist in Bezug auf eine senkrecht zum Basisabschnitt 14 und parallel zur Längsrichtung L verlaufende Mittelebene M (nur in Fig. 1 dargestellt) spiegelsymmetrisch ausgebildet und weist eine Öffnung mit einer Breite B auf, durch welche ein sich in Längsrichtung L erstreckendes Abdeckprofil 25 in das Grundprofil 12 eingesetzt werden kann, um die Abdeckschiene 10 zusammenzusetzen. Fig. 1 zeigt die Abdeckschiene vor dem Einsetzen des Abdeckprofils 25 in das Grundprofil 12 und Fig. 2 zeigt den zusammengesetzten Zustand der Abdeckschiene 10, d.h. das Abdeckprofil 25 wurde in das Grundprofil 12 eingesetzt.

An dem Abdeckprofil 25 stehen von einem langgestreckten Abdeckabschnitt 26 ein erster und ein zweiter Rastschenkel 28, 30 so ab, dass der Abdeckabschnitt 26 einen zwischen den Rastschenkeln 28, 30 angeordneten Teil 32 und einen seitlich über den zweiten Rastschenkel 30 überstehenden Teil 34 aufweist, wodurch das Abdeckprofil einen F-förmigen Querschnitt aufweist. Der zweite Rastschenkel 30 ist kürzer als der erste Rastschenkel 28. An dem ersten und zweiten Rastschenkel 28, 30 sind jeweils mit den Befestigungsmitteln 20, 22 verrastbare erste und zweite Rastmittel 36, 38 vorgesehen, die Kontaktflächen 40 aufweisen, welche ausgehend von den jeweiligen Rastschenkeln 28, 30 vom Abdeckabschnitt 26 weggeneigt sind. Im zusammengesetzten Zustand liegt jeweils eine der Kontaktflächen 24 an jeweils einer der Kontaktflächen 40 an.

Aus dem in Fig. 2 dargestellten zusammengesetzten Zustand der Abdeckschiene 10 ist ersichtlich, dass die Befestigungsschenkel 16, 18 die Rastschenkel 28, 30 umgreifen, wenn das Abdeckprofil 25 in das Grundprofil 12 eingesetzt ist. Ferner sind im zusammengesetzten Zustand die Befestigungsmittel 20, 22 mit den Rastmitteln 36, 38 verrastet und der überstehende Teil 34 des Abdeckabschnitts 26 ragt seitlich über den zweiten Befestigungsschenkel 18 hinaus. Jedes der Befestigungsmittel 20, 22 bildet mit dem zugehörigen Rastmittel 36, 38 eine Hinterschneidung. Da der zweite Rastschenkel 30 kürzer ist als der erste Rastschenkel 28 und das Grundprofil 12 gleichlange Befestigungsschenkel 16, 18 aufweist, ragt im zusammengesetzten Zustand der zweite Rastschenkel 30 nicht bis zum Basisabschnitt 14 des Grundprofils 12, so das ein Ende 42 des zweiten Rastschenkels 30 und der Basisabschnitt 14 im zusammengesetzten Zustand in einem Abstand (A) voneinander beabstandet sind. Der längere erste Rastschenkel 30 ragt mit seinem Ende 43 im zusammengesetzten Zustand bis an den Basisabschnitt 14 in den U-förmigen Querschnitt des Grundprofils 12 hinein. Der zweite Befestigungsschenkel 18 ist so an den zweiten Rastschenkel 30 angepasst, dass er im zusammengesetzten Zustand mit einem Ende 44 bis zu dem seitlich über den zweiten Befestigungsschenkel 18 hinausragenden Abdeckabschnitt 26 ragt. Im zusammengesetzten Zustand weist die Abdeckschiene 10 eine lichte Weite W auf, in welche ein abzudeckendes Material (nicht dargestellt) hineinreichen kann. Das Grundprofil 12 weist eine Bohrstaubaufnahme 45 auf, die in einem Fußbereich 45a des zweiten Befestigungsschenkels 18, d.h. in dem Bereich, in welchem der Basisabschnitt 14 mit dem zweiten Befestigungsschenkel 18 zusammentrifft, einen ausgebildeten Freiraum 45b zur Aufnahme von Bohrstaub und/oder anderem Schmutz (in den Figuren nicht dargestellt) umfasst, wobei der Freiraum 45b auch im zusammengesetzten Zustand der Abdeckschiene 10 über den Abstand A mit einem Innenbereich 46 der Abdeckschiene 10 in Verbindung steht, da der zweite Rastschenkel 30 nicht bis zum Basisabschnitt 14 ragt.

Aus Fig. 3 ist ersichtlich, dass in dem Basisabschnitt 14 des Grundprofils 10 zwei Bohrungen 48, 50 vorgesehen sind, durch welche das Grundprofil 12 an einer Wand (nicht dargestellt) befestigt werden kann. Bei den Bohrungen 48, 50 handelt es sich um eine vertikale Langlochbohrung 48 und um eine horizontale Langlochbohrung 50, welche in Längsrichtung voneinander beabstandet sind. Es versteht sich jedoch, dass in dem Basisabschnitt 14 auch noch weitere Bohrungen vorgesehen sein können.

Bei den weiteren Ausführungsformen gemäß den Fig. 4 bis 6 werden für gleiche bzw. ähnliche Elemente, wie sie zu den Fig. 1 bis 3 bereits beschrieben wurden, die gleichen Bezugszeichen verwendet. Darüber hinaus werden im Wesentlichen lediglich die Unterschiede zu der Ausführungsform nach den Fig. 1 bis 3 näher erläutert.

Bei dem in Fig. 4 gezeigten Querschnitt einer Variante eines Grundprofils 12 ist der erste Befestigungsschenkel 16 mit einer ersten Beschichtung 52 beschichtet und der zweite Befestigungsschenkel 18 mit einer zweiten Beschichtung 54 beschichtet. Abgesehen davon ist das in Fig. 4 dargestellte Grundprofil 12 identisch zu dem Grundprofil 12 der in den Fig. 1 bis 3 gezeigten Ausführungsform. Die Beschichtungen 52, 54 unterscheiden sich voneinander, beispielsweise anhand ihrer Farbe oder Helligkeit, wodurch sich vielseitigere Einsatzmöglichkeiten für die Abdeckschiene ergeben. So kann an einem hellen Gebäude beispielsweise das Grundprofil 12 so ausgerichtet werden, dass die Hellere der Beschichtungen 52, 54 im zusammengesetzten Zustand sichtbar ist. Wird das Grundprofil 12 um 180° gedreht, so ist im zusammengesetzten Zustand der Abdeckschiene 10 die Dunklere der Beschichtungen 52, 54 sichtbar, was beispielsweise an einem dunklen Gebäude erwünscht sein kann. Es versteht sich, dass der zwischen den Beschichtungen 52, 54 und dem Grundprofil 12 in Fig. 4 gezeigte Abstand lediglich zur besseren Darstellung der Beschichtungen 52, 54 dargestellt ist.

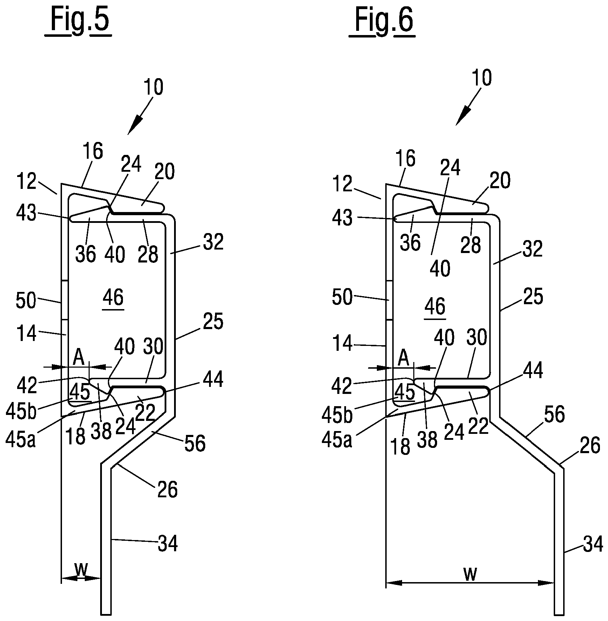

Wie in den Fig. 5 und 6 gezeigt, kann das Grundprofil 12 der in den Figuren 1 bis 3 gezeigten Ausführungsform auch mit anderen Abdeckprofilen 25 verwendet werden. Die in den Fig. 5 und 6 gezeigten Abdeckschienen 10 weisen Abdeckprofile 25 mit Abdeckabschnitten 26 auf, die zwischen dem zwischen den Rastschenkeln 28, 30 angeordneten Teil 32 und dem im zusammengesetzten Zustand über den zweiten Befestigungsschenkel 18 überstehenden Teil 34 einen in Richtung des Basisabschnitts geneigten (Fig. 5) bzw. vom Basisabschnitt weggeneigten (Fig. 6) Teil 56 aufweisen. Wenn der geneigte Teil 56 wie bei dem Abdeckprofil in Fig. 5 in Richtung des Basisabschnitts 14 geneigt ist, so wird hierdurch die lichte Weite W im Vergleich zu einem Abdeckabschnitt 26 ohne geneigten Teil 56 verringert. Bei dem in Fig. 6 gezeigten Abdeckprofil 25 ist in dem Abdeckabschnitt 26 ein von dem Basisabschnitt 14 weggeneigter Teil 56 ausgebildet, wodurch die lichte Weite W im Vergleich zu dem in den Fig. 1, 2 und 5 dargestellten Abdeckprofilen 25 vergrößert ist.

Zur Montage der in den Figuren dargestellten Abdeckschienen 10 wird zunächst das Grundprofil 12 an einer Wand montiert, indem das Grundprofil 12 an die Wand gehalten wird und durch die in dem Basisabschnitt 14 vorgesehenen Bohrungen 48, 50 gebohrt und anschließend das Grundprofil 12 an die Wand geschraubt wird. Beim Bohren entstehender Bohrstaub und Schmutz kann sich in der innerhalb des U-förmigen Querschnitts des Grundprofils 12 vorgesehenen Bohrstaubaufnahme 45 sammeln, wodurch ein anschließendes Einsetzen des Abdeckprofils 25 in das Grundprofil 12 durch den Bohrstaub und/oder Schmutz nicht behindert wird. Auch größere Verunreinigungen im Grundprofil 12 stören das Zusammensetzen der in den Figuren dargestellten Abdeckschienen 10 nicht, da der zweite Rastschenkel 30 im zusammengesetzten Zustand nicht bis zum Basisabschnitt 14 ragt. Deshalb haben die Schmutzpartikel zwischen dem Ende 43 des zweiten Rastschenkels 30 und dem Basisabschnitt 14 Platz, und verhindern nicht ein Einsetzen des Abdeckprofils 25 in das Grundprofil 12 beim Zusammensetzen der Abdeckschiene 10. Durch die vertikalen und horizontalen Langlochbohrungen 48, 50 wird das Anbringen des Grundprofils 12 an der Wand erleichtert, da die Langlochbohrungen 48, 50 ein Ausrichten des Grundprofils 12 auch dann noch ermöglichen, nachdem die entsprechenden Löcher bereits in die Wand gebohrt wurden.

Indem der erste Rastschenkel 30 mit dem Ende 43 im zusammengesetzten Zustand am Basisabschnitt 14 anliegt und der zweite Befestigungsschenkel 18 mit seinem Ende 44 am Abdeckabschnitt 26 anliegt, wird sichergestellt, dass der Abdeckabschnitt 26 nicht weiter als beabsichtigt in das Grundprofil 12 eingesetzt werden kann. Durch die geneigten Kontaktflächen 24 und 40 der Befestigungs- und Rastmittel 20, 22, 36, 38 ist ein Herausnehmen des Abdeckprofils 25 aus dem Grundprofil 12 erleichtert, da die Befestigungs- und Rastmittel 20, 22, 36, 38 aufgrund der geneigten Kontaktflächen 24 und 40 leichter aneinander vorbeibewegbar sind.

Durch den Außenwinkel α von größer 270° steht der erste Befestigungsschenkel schräg vom Basisabschnitt ab, sodass Wasser von dem Grundprofil ablaufen kann.

### Bezugszeichenliste

- 10: Abdeckschiene
- 12: Grundprofil
- 14: Basisabschnitt
- 16: erster Befestigungsschenkel
- 18: zweiter Befestigungsschenkel
- 20: erstes Befestigungsmittel
- 22: zweites Befestigungsmittel
- 24: Kontaktfläche
- 25: Abdeckprofil
- 26: Abdeckabschnitt
- 28: erster Rastschenkel
- 30: zweiter Rastschenkel
- 32: Teil
- 34: überstehender Teil
- 36: erstes Rastmittel
- 38: zweites Rastmittel
- 40: Kontaktfläche
- 42: Ende zweiter Rastschenkel
- 43: Ende erster Rastschenkel
- 44: Ende zweiter Befestigungsschenkel
- 45: Bohrstaubaufnahme
- 45a: Fußbereich
- 45b: Freiraum
- 46: Innenbereich
- 48: vertikale Langlochbohrung
- 50: horizontale Langlochbohrung
- 52: erste Beschichtung
- 54: zweite Beschichtung
- 56: geneigter Teil

- L: Längsrichtung
- M: Mittelebene
- A: Abstand
- B: Breite
- W: lichte Weite
- α: Innenwinkel

## Patentansprüche

1. Abdeckschiene (10), umfassend
ein sich in einer Längsrichtung (L) erstreckendes Grundprofil (10) mit einem langgestreckten Basisabschnitt (14) sowie einem ersten und einem zweiten Befestigungsschenkel (16, 18), wobei die Befestigungsschenkel (16, 18) von dem Basisabschnitt (14) abstehen und gemeinsam mit zumindest einem Teil des Basisabschnitts (14) einen U-förmigen Querschnitt bilden, und ein sich in Längsrichtung (L) erstreckendes Abdeckprofil (25) mit einem langgestreckten Abdeckabschnitt (26) und einem ersten und einem zweiten Rastschenkel (28, 30), wobei die Rastschenkel (28, 30) so von dem Abdeckabschnitt (26) abstehen, dass der Abdeckabschnitt (26) einen zwischen den Rastschenkeln (28, 30) angeordneten Teil (32) und einen seitlich über einen der Rastschenkel überstehenden Teil (34) aufweist, wobei das Grundprofil (12) und das Abdeckprofil (25) ausgebildet sind, zur Bildung der Abdeckschiene (10) zusammengesetzt zu werden,
wofür an dem ersten und zweiten Befestigungsschenkel (16, 18) jeweils Befestigungsmittel (20, 22) und an dem ersten und zweiten Rastschenkel (28, 30) jeweils mit den Befestigungsmitteln (20, 22) verrastbare Rastmittel (36, 38) vorgesehen sind, und wobei
im zusammengesetzten Zustand der Abdeckschiene (10) die Befestigungsmittel (20, 22) mit den Rastmitteln (36, 38) verrastet sind und der überstehende Teil (34) des Abdeckabschnitts (26) seitlich über einen der Befestigungsschenkel (16, 18) hinausragt
**dadurch gekennzeichnet, dass**
beide Außenwinkel (α) des U-förmigen Querschnitts, die jeweils zwischen einem der Befestigungsschenkel (16, 18) und dem Basisabschnitt (14) vorliegen, größer als 270° sind.

2. Abdeckschiene (10) nach Anspruch 1,
**dadurch gekennzeichnet, dass**
das Abdeckprofil (25) und das Grundprofil (12) nach dem Zusammensetzen wieder voneinander trennbar sind.

3. Abdeckschiene (10) nach Anspruch 1 oder 2,
**dadurch gekennzeichnet, dass**
das Grundprofil (12) aus dem Basisabschnitt (14), dem ersten Befestigungsschenkel (16) und dem zweiten Befestigungsschenkel (18) besteht.

4. Abdeckschiene (10) nach Anspruch 3,
**dadurch gekennzeichnet, dass**
das Grundprofil (12) in Bezug auf eine senkrecht zum Basisabschnitt (14) und parallel zur Längsrichtung (L) verlaufende Mittelebene (M) spiegelsymmetrisch ausgebildet ist.

5. Abdeckschiene (10) nach zumindest einem der vorstehenden Ansprüche, **dadurch gekennzeichnet, dass**
der erste Befestigungsschenkel (16) und der zweite Befestigungsschenkel (20) mit voneinander verschiedenen Beschichtungen (52, 54) versehen sind.

6. Abdeckschiene (10) nach zumindest einem der vorstehenden Ansprüche, **dadurch gekennzeichnet, dass**
in dem Basisabschnitt (14) zumindest eine horizontale und eine vertikale Langlochbohrung (50, 48) vorgesehen sind.

7. Abdeckschiene (10) nach zumindest einem der vorstehenden Ansprüche, **dadurch gekennzeichnet, dass**
der erste und der zweite Rastschenkel (28, 30) unterschiedlich lang ausgebildet sind.

8. Abdeckschiene (10) nach zumindest einem der vorstehenden Ansprüche, **dadurch gekennzeichnet, dass**
zwischen dem zweiten Rastschenkel (30) und dem Basisabschnitt (14) im zusammengesetzten Zustand der Abdeckschiene ein Abstand (A) ausgebildet ist.

9. Abdeckschiene (10) nach Anspruch 8,
**dadurch gekennzeichnet, dass**
in dem Grundprofil (12) eine Bohrstaubaufnahme (45) vorgesehen ist, die einen im Fußbereich (45a) des zweiten Befestigungsschenkels (18) ausgebildeten Freiraum (45b) umfasst, der im zusammengesetzten Zustand der Abdeckschiene (10) über den Abstand (A) mit einem Innenbereich (46) der Abdeckschiene (10) in Verbindung steht.

10. Abdeckschiene (10) nach zumindest einem der vorstehenden Ansprüche, **dadurch gekennzeichnet, dass**
sich der erste Rastschenkel (28) im zusammengesetzten Zustand der Abdeckschiene (10) bis zum oder annähernd bis zum Basisabschnitt (14) erstreckt.

11. Abdeckschiene (10) nach zumindest einem der vorstehenden Ansprüche, **dadurch gekennzeichnet, dass**
das Abdeckprofil (25) so ausgebildet ist, dass es zumindest in einem Abschnitt einen F-förmigen Querschnitt aufweist.

12. Abdeckschiene (10) nach zumindest einem der vorstehenden Ansprüche, **dadurch gekennzeichnet, dass**
im zusammengesetzten Zustand der Abdeckschiene (10) die Rastschenkel (28, 30) zwischen den Befestigungsschenkeln (16, 18) angeordnet sind.

13. Abdeckschiene (10) nach zumindest einem der Ansprüche 2 bis 12,
**dadurch gekennzeichnet, dass**
zumindest eines der an den Befestigungsschenkeln (16, 18) vorgesehenen Befestigungsmittel (20, 22) eine Kontaktfläche (24) aufweist, die ausgehend von dem Befestigungsschenkel (16, 18), an dem das zumindest eine Befestigungsmittel (20, 22) vorgesehen ist, von dem Basisabschnitt (14) des Grundprofils (12) weggeneigt ist, wobei im zusammengesetzten Zustand der Abdeckschiene (10) das zumindest eine Befestigungsmittel (20, 22) mit der Kontaktfläche (24) an dem Rastmittel (36, 38), mit dem es verrastet ist, anliegt und eine Hinterschneidung bildet.

14. Abdeckschiene (10) nach zumindest einem der Ansprüche 2 bis 13,
**dadurch gekennzeichnet, dass**
zumindest eines der an den Rastschenkeln (28, 30) vorgesehenen Rastmittel (36, 38) eine Kontaktfläche (40) aufweist, die ausgehend von dem Rastschenkel (28, 30), an dem das zumindest eine Rastmittel (36, 38) vorgesehen ist, von dem Abdeckabschnitt (26) des Abdeckprofils (25) weggeneigt ist, wobei im zusammengesetzten Zustand der Abdeckschiene (10) das zumindest eine Rastmittel (36, 38) mit der Kontaktfläche (40) an dem Befestigungsmittel (20, 22), mit dem es verrastet ist, anliegt und eine Hinterschneidung bildet.

## Claims

1. A cover rail (10) comprising
a base section (10) extending in a longitudinal direction (L) and having an elongated base portion (14) and first and second fastening limbs (16, 18), wherein the fastening limbs (16, 18) project from the base portion (14) and form a U-shaped cross-section together with at least one part of the base portion (14); and
a cover section (25) extending in the longitudinal direction (L) and having an elongated cover portion (26) and first and second latching limbs (28, 30), wherein the latching limbs (28, 30) project from the cover portion (26) such that the cover portion (26) has a part (32) arranged between the latching limbs (28, 30) and a part (34) projecting laterally beyond one of the latching limbs; wherein
the base section (12) and the cover section (25) are configured to be assembled to form the cover rail (10),
for which purpose fastening means (20, 22) are in each case provided at the first and second fastening limbs (16, 18) and latching means (36, 38) which are latchable to the fastening means (20, 22) are in each case provided at the first and second latching limbs (28, 30); and wherein,
in the assembled state of the cover rail (10), the fastening means (20, 22) are latched to the latching means (36, 38) and the projecting part (34) of the cover portion (26) projects laterally beyond one of the fastening limbs (16, 18),
**characterized in that**
both outer angles (α) of the U-shaped cross-section, which are each present between one of the fastening limbs (16, 18) and the base portion (14), are greater than 270°.

2. A cover rail (10) in accordance with claim 1,
**characterized in that**
the cover section (25) and the base section (12) can be separated from one another again after the assembly.

3. A cover rail (10) in accordance with claim 1 or claim 2,
**characterized in that**
the base section (12) consists of the base portion (14); the first fastening limb (16); and the second fastening limb (18).

4. A cover rail (10) in accordance with claim 3,
**characterized in that**
the base section (12) is formed with mirror symmetry with respect to a central plane (M) extending perpendicular to the base portion (14) and in parallel with the longitudinal direction (L).

5. A cover rail (10) in accordance with at least one of the preceding claims, **characterized in that**
the first fastening limb (16) and the second fastening limb (20) are provided with coatings (52, 54) which differ from one another.

6. A cover rail (10) in accordance with at least one of the preceding claims, **characterized in that**
at least one horizontal elongate hole bore and one vertical elongate hole bore (50, 48) are provided in the base portion (14).

7. A cover rail (10) in accordance with at least one of the preceding claims, **characterized in that**
the first and second latching limbs (28, 30) are formed with different lengths.

8. A cover rail (10) in accordance with at least one of the preceding claims, **characterized in that**
a spacing (A) is formed between the second latching limb (30) and the base portion (14) in the assembled state of the cover rail.

9. A cover rail (10) in accordance with claim 8,
**characterized in that**
a drill dust receiver (45) is provided in the base section (12) and comprises a free space (45b) which is formed in the foot region (45a) of the second fastening limb (18) and which is in connection with an inner region (46) of the cover rail (10) via the spacing (A) in the assembled state of the cover rail (10).

10. A cover rail (10) in accordance with at least one of the preceding claims, **characterized in that**
the first latching limb (28) extends up to or approximately up to the base portion (14) in the assembled state of the cover rail (10).

11. A cover rail (10) in accordance with at least one of the preceding claims, **characterized in that**
the cover section (25) is formed such that it has an F-shaped cross-section in at least one section.

12. A cover rail (10) in accordance with at least one of the preceding claims, **characterized in that**
the latching limbs (28, 30) are arranged between the fastening limbs (16, 18) in the assembled state of the cover rail (10).

13. A cover rail (10) in accordance with at least one of the claims 2 to 12, **characterized in that**
at least one of the fastening means (20, 22) provided at the fastening limbs (16, 18) has a contact surface (24) which, starting from the fastening limb (16, 18) at which the at least one fastening means (20, 22) is provided, is inclined away from the base portion (14) of the base section (12), with, in the assembled state of the cover rail (10), the at least one fastening means (20, 22) contacting the latching means (36, 38), to which it is latched, with the contact surface (24) and forming an undercut.

14. A cover rail (10) in accordance with at least one of the claims 2 to 13, **characterized in that**
at least one of the latching means (36, 38) provided at the latching limbs (28, 30) has a contact surface (40) which, starting from the latching limb (28, 30) at which the at least one latching means (36, 38) is provided, is inclined away from the cover portion (26) of the cover section (25), with, in the assembled state of the cover rail (10), the at least one latching means (36, 38) contacting the fastening means (20, 22), to which it is latched, with the contact surface (40) and forming an undercut.

## Revendications

1. Rail de recouvrement (10) comprenant
un profilé de base (10) s'étendant dans une direction longitudinale (L) et ayant une portion de base allongée (14) et une première et une seconde branche de fixation (16, 18), les branches de fixation (16, 18) faisant saillie de la portion de base (14) et formant conjointement avec au moins une partie de la portion de base (14) une section transversale en forme de U, et un profilé de recouvrement (25) s'étendant dans la direction longitudinale (L) et ayant une portion de recouvrement allongée (26) et une première et une seconde branche d'enclenchement (28, 30), les branches d'enclenchement (28, 30) faisant saillie de la portion de recouvrement (26) de telle sorte que la portion de recouvrement (26) comprend une partie (32) disposée entre les branches d'enclenchement (28, 30) et une partie (34) dépassant latéralement au-delà de l'une des branches d'enclenchement, dans lequel
le profilé de base (12) et le profilé de recouvrement (25) sont réalisés pour être assemblés en vue de former le rail de recouvrement (10), ce pourquoi des moyens de fixation (20, 22) sont prévus respectivement sur les première et seconde branches de fixation (16, 18), et des moyens d'enclenchement (36, 38) susceptibles de s'enclencher avec les moyens de fixation (20, 22) sont prévus respectivement sur les première et seconde branches d'enclenchement (28, 20), et
à l'état assemblé du rail de recouvrement (10), les moyens de fixation (20, 22) sont enclenchés avec les moyens d'enclenchement (36, 38) et la partie dépassant (34) de la portion de recouvrement (26) s'étend latéralement au-delà de l'une des branches de fixation (16, 18),
**caractérisé en ce que**
les deux angles extérieurs (α) de la section transversale en forme de U qui se présentent entre l'une des branches de fixation respectives (16, 18) et la portion de base (14) sont supérieurs à 270°.

2. Rail de recouvrement (10) selon la revendication 1,
**caractérisé en ce que**
après l'assemblage, le profilé de recouvrement (25) et le profilé de base (12) peuvent être séparés l'un de l'autre.

3. Rail de recouvrement (10) selon la revendication 1 ou 2,
**caractérisé en ce que**
le profilé de base (12) est constitué par la portion de base (14), par la première branche de fixation (16) et par la seconde branche de fixation (18).

4. Rail de recouvrement (10) selon la revendication 3,
**caractérisé en ce que**
le profilé de base (12) est réalisé à symétrie axial par rapport à un plan central (M) s'étendant perpendiculairement à la portion de base (14) et parallèlement à la direction longitudinale (L).

5. Rail de recouvrement (10) selon l'une au moins des revendications précédentes,
**caractérisé en ce que**
la première branche de fixation (16) et la seconde branche de fixation (20) sont pourvues de revêtements (52, 54) différents l'un de l'autre.

6. Rail de recouvrement (10) selon l'une au moins des revendications précédentes,
**caractérisé en ce que**
au moins un trou oblong horizontal et un trou oblong vertical (50, 48) sont prévus dans la portion de base (14).

7. Rail de recouvrement (10) selon l'une au moins une revendications précédentes,
**caractérisé en ce que**
la première et la seconde branche d'enclenchement (28, 30) sont de longueurs différentes.

8. Rail de recouvrement (10) selon l'une au moins des revendications précédentes,
**caractérisé en ce que**
à l'état assemblé du rail de recouvrement, une distance (A) est formée entre la seconde branche d'enclenchement (30) et la portion de base (14).

9. Rail de recouvrement (10) selon la revendication 8,
**caractérisé en ce que**
un logement à poussières de perçage (45) est prévu dans le profilé de base (12) et présente un espace libre (45b) formé dans la zone de pied (45a) de la seconde branche de fixation (18), espace qui, à l'état assemblé du rail de recouvrement (10), est en liaison avec une zone intérieure (46) du rail de recouvrement (10) sur la distance (A).

10. Rail de recouvrement (10) selon l'une au moins des revendications précédentes,
**caractérisé en ce que**
à l'état assemblé du rail de recouvrement (10), la première branche d'enclenchement (28) s'étend jusqu'à ou approximativement jusqu'à la portion de base (14).

11. Rail de recouvrement (10) selon l'une au moins des revendications précédentes,
**caractérisé en ce que**
le profilé de recouvrement (25) est réalisé de manière à présenter au moins dans une portion une section transversale en forme de F.

12. Rail de recouvrement (10) selon l'une au moins des revendications précédentes,
**caractérisé en ce que**
à l'état assemblé du rail de recouvrement (10), les branches d'enclenchement (28, 30) sont disposées entre les branches de fixation (16, 18).

13. Rail de recouvrement (10) selon l'une au moins des revendications 2 à 12, **caractérisé en ce que**
l'un au moins des moyens de fixation (20, 22) prévus sur les branches de fixation (16, 18) présente une surface de contact (24) qui, en partant de la branche de fixation (16, 18) sur laquelle est prévu ledit au moins un moyen de fixation (20, 22), est inclinée en éloignement de la portion de base (14) du profilé de base (12), et
à l'état assemblé du rail de recouvrement (10), ledit au moins un moyen de fixation (20, 22) s'appuie par la surface de contact (24) contre le moyen d'enclenchement (36, 38) avec lequel il est enclenché, et forme une contre-dépouille.

14. Rail de recouvrement (10) selon l'une au moins des revendications 2 à 13, **caractérisé en ce que**
l'un au moins des moyens d'enclenchement (36, 38) prévus sur les branches d'enclenchement (28, 30) présente une surface de contact (40) qui, en partant de la branche d'enclenchement (28, 30) sur laquelle est prévu ledit au moins un moyen d'enclenchement (36, 38), est inclinée en éloignement de la portion de recouvrement (26) du profilé de recouvrement (25), et
à l'état assemblé du rail de recouvrement (10), ledit au moins un moyen d'enclenchement (36, 38) s'appuie par la surface de contact (24) contre le moyen de fixation (20, 22) avec lequel il est enclenché, et forme une contre-dépouille.
